# EUROPEAN PATENT SPECIFICATION

(11) **EP 1 177 487 B1**
(45) Date of publication and mention of the grant of the patent: **10.11.2004**
(21) Application number: 99966741.3
(22) Date of filing: 21.12.1999
(51) Int. Cl.: G05B 23/02

(54) **STRUCTURE MANAGEMENT AND CONTROL SYSTEM**
STRUKTURVERWALTUNG UND STEUERUNGSSYSTEM
SYSTEME DE GESTION ET DE COMMANDE DE STRUCTURES

(30) Priority: 21.04.1999 ZA 9902867
(43) Date of publication of application: 06.02.2002
(73) Proprietor: Kvale, Ivar, 7500 Plattekloof (ZA)
(72) Inventor: Kvale, Ivar, 7500 Plattekloof (ZA)
(74) Representative: Goodenough, Nigel
(86) International application number: PCT/ZA1999/000144
(87) International publication number: WO 2000/063754

(56) References cited:
- EP-A- 0 503 173
- EP-A- 0 694 825
- EP-A- 0 810 557
- DE-A- 19 740 974
- US-A- 5 311 562
- US-A- 5 412 400
- US-A- 5 588 109
- US-A- 5 812 394

## Description

### Technical Field of the Invention

The invention relates to a management and control system for buildings. In particular the invention relates to a computer based management and control system for buildings, which is used to facilitate the management and control of multiple systems for any building.

### Background to the Invention

The concept of using SCADA software for controlling certain aspects of Building Management has been implemented for a long time. However, these products were generally written as add in features for standalone systems and have been designed to interact only with one particular aspect of the management and control system. They have not been designed to be user friendly and intuitive, but have been provided solely as an additional tool for monitoring and controlling the system. It has therefore been necessary to incorporate several different systems in a central control room to manage all the systems of the site. Control rooms tend to become cluttered with several systems that also become complex to manage, as the operator has to be trained to use each of these systems.
The prior art knows a management and control system useful for binding books. ( DE 197 40 974; Wohlenberg Buchbindersysteme G; 18 March 1999) and a System for monitoring and controlling the engineering equipment of an installation (EP 1 117 018; Ginzburg et al; 30 March 2000). Each of these systems has components sitting on a common backbone which has a single protocol (language) to communicate with its components. No attempt is made to integrate different systems with different protocols. This leads to cluttered control rooms as described above. The present invention is aimed at overcoming this disadvantage.

### Summary of the Invention

Thus, according to a first aspect of the invention, there is provided a management and control system for a building having multiple systems with different protocols and which includes one or more graphical user interface on which is displayed a site plan of said building for permitting a user to input instructions relating to various zones of said building and to monitor the status of various systems of said building and is useful to facilitate the management and control of multiple systems having different protocols for said building, said systems including
- one or more data acquisition means from acquiring data regarding the status of said building;
- one or more control function performing means for effecting control over at least some aspects of said building;
- one or more data storage means;
- one or more instruction sets provided on the data storage means, said instruction sets including the relationship between the data collected by the data acquisition means, the instructions input by a user via the graphical user interface, preset operating parameters for said building, and control function output values responsive to the data collected by the data acquisition means, the instructions input by the user via the graphical user interface, and preset operating parameters for said building; and
- one or more data processors for processing said instruction set and generating output values for the control function performing means and the graphical user interface.

The site plan which is a true to scale CAD generated drawing may consist of a number of so called layers which may be viewed on the graphical user interface either simultaneously for an overview of the status of the entire building or individually for monitoring and controlling specific systems of said building.

Typically a first layer consists of a detailed plan view of at least a zone of the building and each further layer relates to a different system of said building, for example, one layer for security, one layer for air conditioning, one layer for telephones, and the like, in use, one or more further layer being overlaid over said plan view to show the status of that system for that zone of the building as well as to permit user input relating to that system for that zone.

The system may include a further input means, such as a pointing device, a mouse, a touch screen monitor, a tracker ball, a light pen, or the like, for selecting a system to overlay over said plan.

A number of objects of the system on the plan being displayed may be set to active, deactivated, set to a value, and/or set to display the current status by using said further input means. The further input means may also be used to set up the relationship between various objects, or between said building and the objects, or between the environment and the objects.

Furthermore, the graphical user interface may be used to display historical trends of the systems or parts thereof, online operating manuals for the system, online instructions for situation management of said building, technical drawings of said system, technical drawings of said building, and maintenance information regarding the management and control system and/or said building.

The management and control system may be accessible over a computer network.

The management and control system may have all documentation, manuals, floor plans and drawings are interactively incorporated into the system.

The management and control system may include a management accounting system.

The management and control system may keep a record of costs of maintenance and service.

The management and control system may automatically generate service reports.

The management and control system may generate job cards for maintenance and service work, track maintenance and service work and the completion thereof.

The management and control system may include means for communicating detailed system information to external agencies such as a local fire or police department.

The management and control system may include multiple monitors each being adapted to show different information and to be individually controlled.

The management and control system may provide for context sensitive messaging to cell phones or pagers.

The graphical user interface of the system may be an intuitive graphical interface to assist the user in navigating the system.

The invention also covers a building when managed and controlled by the management and control system as previously described.

### Brief Description Of Drawings

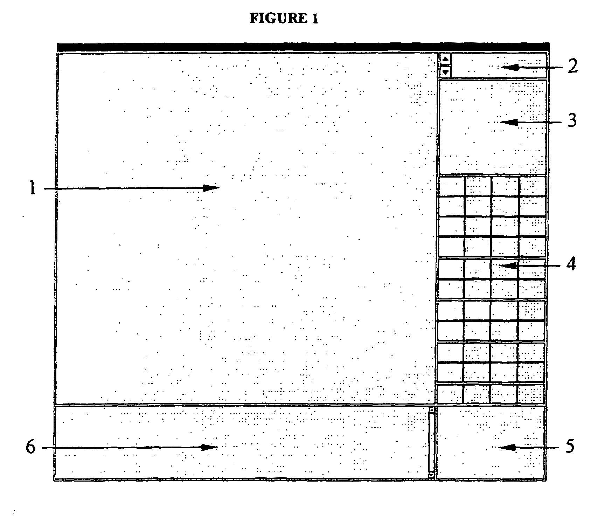

Figure 1 is a sample layout of the graphical user interface. This interface contains:
   - A Main Window 1 which will be used to display the current drawing and the appropriate layers that are active.
   - A Floor/Level Selection Box 2, which will display the currently active floor/level and have a means of selecting the current floor/level.
   A Layout Window 3, which will display a drawing of the entire floor/level, highlighting the area of that floor/level that is currently viewed in the Main Window 1.
   - Various Control Buttons 4 to select different systems (fire detection, air conditioning, etc.), control the view of the drawing (pan, zoom, etc.), access help
      and documentation, open new windows for further information (job cards, event lists, etc.), control the view in the Main Window 1, allow users to log in or out, etc.
   - A User Window 5 displaying the details of the user who is currently logged in to the system.
   - A Status Window 6, which contains a list of events that have occurred. A user can scroll through this list.

This is only one example of a layout describing what the graphical user interface looks like. However, the interface is completely configurable. A user is able to determine which windows or buttons to display, the size and position of windows and buttons, as well as the exact text that is displayed on the buttons.
A single computer is used to monitor and control all of the systems at the same time. With this system a user is able to control and monitor any aspect of management and control from a desktop computer. A high quality drawing of the site plan is displayed on the monitor (or multiple monitors) at all times. This drawing file must be created according to a standard in such a way that each system is drawn on a separate layer. Therefore, by clicking a button (using a mouse or touchscreen monitor), the user can select a system to view, and the corresponding layer can be overlaid onto the site plan. All the objects on these system layers can be active, and by clicking on a device, the user can control its current state, program its state to change based on input conditions or display information about the device. This information includes real time status of devices, historical analysis of device status (both graphical and numerical), online manuals and documentation for the device, technical drawings of the device, etc.
The system can be implemented using any suitable high-level development software to create the application. The application should be written in a modular fashion. I.e. the graphical user interface and the physical hardware interfaces should each be developed as separate modules that interact with each other. In this way the system will be fully scalable to incorporate the control of any number of systems (e.g. Access Control, Fire Detection, Air Conditioning, Intercom, CCTV, Plant Room Control, etc.), depending on the specific application for which it will be used.

### Example 1:

This example suggests a possible method of implementing the invention with particular reference to the monitoring and control of systems for a building.
1. When the application is started, the pre-configured default floor for the building is displayed in the Main Window 1. The User Window 5 at the bottom right of the screen indicates that no user is currently logged in to the system. In this mode the system can be viewed and devices monitored, but no outputs can be changed, or devices activated, controlled or programmed.
2. In order to log in to the system the user clicks the "Log In" button (not shown but one of the Control Buttons 4).
3. The user is prompted to enter his password. When the user has typed his password and pressed enter, the system checks the user database to see if the password is valid, and to which user it belongs. This event is displayed in the Status Window 6 and is also recorded in the history event log.
4. After logging in correctly, the users name and access level are displayed in the User Window 5.
5. By clicking on buttons (up or down) in the Floor/Level Selection Box 2, the user can select the current floor that is viewed. The name of the current floor is displayed in the Floor/Level Selection Box 2. A drawing of the current floor is displayed in the Layout Window 3. The entire floor is also displayed in the Main Window 1.
6. By clicking on the "Zoom In" button (Control Buttons 4) the user activates the zoom in mode. In this mode, if the user clicks on any point in the Main Window 1, the view in that window will zoom in centered around the selected point on the drawing.
7. The zoom in mode can automatically be switched off after the user has zoomed in. The floor Layout Window 3 will now be highlighted to indicate the area of the drawing that is displayed in the Main Window 1.
8. By repeating steps 6 to 7 the user can continue to zoom in until the drawing in the Main Window 1 is at the desired size.
9. By default only the building architecture is displayed in the Main Window 1. The system selection buttons which form part of the Control Buttons 4, on the right of this window can be used to select a system to overlay on the architecture. By clicking on the "Fire Detection" button the fire detection system (a separate layer in the drawing file) will be displayed on top of the architecture. The "Fire Detection" button will remain illuminated to indicate that this system is currently displayed in the Main Window 1. The Layout Window 3 does not display the currently active system, only the architecture.
10. By clicking on any device (e.g. a fire detector on the "Fire Detection" layer) in the Main Window 1, information about that device will be displayed on the screen in a popup window. The information displayed will depend on the device that is clicked. If for example, the user clicked on a fire detector, a popup window is displayed, displaying the type of the detector, the panel that it is connected to, its line number, address, current state and analogue values. There are also buttons in this window, which when clicked on will allow the user to control the device, setup a logged history for that device, or view the history for that device. All popup windows have a "Cancel" option, and when this is clicked the window is closed.
11. By clicking the "Control" button, the detector control popup window is activated, giving the user the option to isolate the detector, enable it, or created a job card for it.
12. Selecting the "Isolate" option brings up another window, giving the user more options regarding the period for which the device should be isolated. This window gives the user the option to isolate a device indefinitely or to isolate a device until a certain time, date or event occurs.
13. By selecting "Isolate Indefinitely", the device is isolated, and will remain isolated until it is enabled by a user.
14. The isolated detector is highlighted and marked, to indicate that it is currently isolated. This event is displayed in the Status Window 6, and recorded in the history event log. A floating icon appears in the Main Window 1, which indicates that there are isolated devices. Clicking on the icon will bring up a list of all isolated devices.
15. By clicking the "Log Out" button at any time, the current user is immediately logged out of the system. This event is also displayed in the Status Window 6 and recorded in the history event log. The user can also optionally print out a list of events that have been recorded during the period that he/she was logged in.
16. The system is automatically returned to its default view. In order for another user to log in to the system, without changing the view in the Main Window 1, the first user must not log out. When the second user logs in, the first user will automatically be logged out, but the view in the Main Window 1 will remain unchanged.

### Example 2:

This example describes the proposed operation of a section of the management system, namely the job cards.
1. By clicking on the "Job Cards" button, a window is displayed that allows the user to view, create or sign off job cards for the various systems. This list defaults to displaying all the job cards for every system, but the user can set a filter to only view job cards based on certain options. These include the system to view, the current status of the job card (whether or not the job card has been issued or signed off), the job cards that relate to certain floors, the job cards that were created by certain users, the job cards that were created between certain dates, etc
2. A user can create a new job card by entering information about the job card that is to be created. Once the information has been typed in the user can print the job card, fax it or email it to a contractor directly from the computer. The details of the job card are saved in a database.
3. A job card's status will be "Pending" until such time as the user indicates that the job has been completed or signed off. In order to do this he needs to know the invoice number and the cost of the job. This information is used by the software to keep a record of expenditure for building maintenance. This information can later be summarised and viewed by the building manager in various formats.

### Example 3:

A user can display a window that lists events and this list can also be filtered, based on any criteria, including the system, the user, the date/time, the device, etc. When the user enters this mode, a window is used to display the filtered list of events. By changing the options the user effectively defines the filtering rules that are applied to list of events. Upon changing the options the list of events is updated to display only the events that are selected by the filter.

### Example 4:

The user can view accounting information in either a graphical or a spreadsheet view. This information is all stored in a database and can be used to show expenditure for the building or parts thereof, and the information can be analysed to determine, for example, if a given system should be replaced, as it is costing too much money to run. The account management data can be viewed in various formats, including management accounts, itemised lists, graphs, spreadsheets, etc.

### Example 5:

1. The user can perform complex programming operations by using the graphical user interface. The user can map the outputs of one or many devices to trigger the inputs of one or many devices. These devices need not be in the same system. To facilitate this type of programming provision can be made for a split window, in which two systems can be viewed at one time.
2. While programming, the user can select inputs, select outputs, group them and determine which input groups trigger the defined output groups.
3. The user can also determine whether the outputs should be pulsed, latched resettable or latched non-resettable.
4. An alternative method of programming devices is to use the list-based method, where the user can select the output devices from one list and the input devices from another, simply by clicking on them.

### Example 6:

In any mode, if someone presses the intercom button at a door that is monitored for access control, with a CCTV camera, the system can be programmed to display the access control window on the screen. From this window the operator can see the picture from the CCTV camera, talk to the person requesting access, store a photo of the person in the database and grant access to the person, by clicking on the appropriate buttons. The operator will make use of a microphone connected to the computer to communicate directly from the workstation to the intercoms at the doors.

### Example 7:

By clicking on the "Public Address" system button the public address and fire telephone system control panel is displayed in the Main Window 1. From this panel the user can make public address announcements, view the status of the P.A. system, sound the "Alert" or "Evacuate" signals and communicate with the fire telephones, using a microphone.

### Example 8:

1. By programming the door monitoring and access control system to interact with the other systems several advanced functions can be performed. For example, when the last person leaves an area the lights can be turned off and the air conditioning can be turned down automatically. In this way the building can be run more efficiently.
2. The system can monitor and log the hours that each person spends in certain areas, and this can even be linked to the accounting package in order to automatically calculate the wages of employees who work on an hourly rate.
3. Similarly, access to certain areas can be restricted to certain hours for each employee. The system operator can then be flagged if an employee has not left a restricted area when he is not supposed to be there.

### Example 9:

In the event of an alarm condition on any system, that system will automatically become active, and the Main Window 1 will display the device that is in alarm. This device will flash. By clicking on the device that is in alarm the user can, in addition to the normal functionality, silence the alarm and reset the system. When one or more devices are in alarm a floating alarm icon will appear for each system that is in alarm. By clicking on this icon the user can select the device that he wishes to view, from a list of all the devices that are in alarm.

### Industrial Application

A management and control system according to the invention will have applications to the running management and control of buildings such as but not limited to multi storey buildings

## Claims

1. A management and control system for a building having multiple systems with different protocols and which includes one or more graphical user interface on which is displayed a site plan of said building for permitting a user to input instructions relating to various zones of said building and to monitor the status of various systems of said building and is useful to facilitate the management and control of multiple systems having different protocols for said building, said systems including
• one or more data acquisition means for acquiring data regarding the status of said building;
• one or more control function performing means for effecting control over at least some aspects of said building;
• one or more data storage means;
• one or more instruction sets provided on the data storage means, said instruction sets including the relationship between the data collected by the data acquisition means, the instructions input by a user via the graphical user interface, preset operating parameters for said building, and control function output values responsive to the data collected by the data acquisition means, the instructions input by the user via the graphical user interface, and preset operating parameters for said building; and
• one or more data processors for processing said instruction set and generating output values for the control function performing means and the graphical user interface.

2. A management and control system as claimed in claim 1, wherein the site plan is substantially a true to scale CAD generated drawing and consists of a number of layers which may be viewed on the graphical user interface either simultaneously for an overview of the status of the entire building or individually for monitoring and controlling specific systems of said building.

3. A management and control system as claimed in claim 2, wherein for each zone one layer consists of a detailed plan view of the building and each further layer relates to a different system of said building for that zone.

4. A management and control system as claimed in claim 3, wherein the further layers for each zone are selected from the group including security, air conditioning, telephones, maintenance, and the like, in use, one or more further layer being overlaid over said plan view to show the status of that system for that zone of the building as well as to permit user input relating to that system for that zone.

5. A management and control system as claimed in any one of the preceding claims, which includes a further input means, such as a pointing device, a mouse, a touch screen monitor, a tracker ball, a light pen, or the like, for selecting a system to overlay over said plan.

6. A management and control system as claimed in claim 5, which includes a number of objects of the system on the plan being displayed and which are settable to active, deactivated, set to a value, and/or set to display the current status by using said further input means.

7. A management and control system as claimed in claim 5 or claim 6, wherein the further input means is also used to set up the relationship between various objects, or between said building and the objects, or between the environment and the objects.

8. A management and control system as claimed in any one of the preceding claims, wherein the graphical user interface is used to display historical trends of the systems or parts thereof, online operating manuals for the system, online instructions for situation management of said building, technical drawings of said system, technical drawings of said building, and maintenance information regarding the management and control system and/or said building.

9. A management and control system as claimed in any one of the preceding claims which is accessible over a computer network.

10. A management and control system as claimed in any one of the preceding claims, having all documentation, manuals, floor plans and drawings produced on a CAD system interactively incorporated into the system.

11. A management and control system as claimed in any one of the preceding claims, further including a management accounting system.

12. A management and control system as claimed in any one of the preceding claims, which also keeps a record of costs of maintenance and service.

13. A management and control system as claimed in any one of the preceding claims which automatically generates service reports.

14. A management and control system as claimed in any one of the preceding claims which generates job cards for maintenance and service work, and also tracks maintenance and service work and the completion thereof.

15. A management and control system as claimed in any one of the preceding claims which includes means for communicating detailed system information to external agencies.

16. A management and control system as claimed in claim 15, wherein the external agencies include armed response security companies, a local fire department, or the police department.

17. A management and control system as claimed in any one of the preceding claims which includes multiple monitors each being adapted to show different information and to be individually controlled.

18. A management and control system as claimed in any one of the preceding claims which provides for context sensitive messaging to cell phones or pagers.

19. A management and control system as claimed in any one of claims 6 to 18, comprising a graphical user interface which is an intuitive graphical interface for assisting the user in navigating the system between the various layers and objects.

20. A building when managed and controlled by the management and control system as claimed in any of claims 1 to 18.

## Patentansprüche

1. Verwaltungs- und Steuersystem für ein Gebäude mit mehreren Systemen mit verschiedenen Protokollen, das eine oder mehrere grafische Benutzeroberflächen aufweist, auf denen ein Standortplan des genannten Gebäudes angezeigt wird, so dass ein Benutzer Instruktionen in Bezug auf verschiedene Zonen des genannten Gebäudes eingeben und den Status von verschiedenen Systemen des genannten Gebäudes überwachen kann, und das nützlich ist, um Verwaltung und Steuerung mehrerer Systeme mit verschiedenen Protokollen für das genannte Gebäude zu erleichtern, wobei die genannten Systeme Folgendes aufweisen:
. ein oder mehrere Datenerfassungsmittel zum Erfassen von Daten über den Status des genannten Gebäudes;
. ein oder mehrere Steuerfunktionsausführungsmittel zum Ausüben von Steuerung von wenigstens einigen Aspekten des genannten Gebäudes;
. ein oder mehrere Datenspeichermittel;
. einen oder mehrere Instruktionssätze auf dem Datenspeichermittel, wobei die genannten Instruktionssätze die Beziehung zwischen den durch das Datenerfassungsmittel gesammelten Daten, die von einem Benutzer über die grafische Benutzeroberfläche eingegebenen Instruktionen, voreingestellte Betriebsparameter für das genannte Gebäude und Steuerfunktionsausgabewerte beinhalten, die auf die von dem Datenerfassungsmittel gesammelten Daten, die von dem Benutzer über die grafische Benutzeroberfläche eingegebenen Instruktionen und die voreingestellten Betriebsparameter für das genannte Gebäude ansprechen; und
. einen oder mehrere Datenprozessoren zum Verarbeiten des genannten Instruktionssatzes und zum Erzeugen von Ausgabewerten für die Steuerfunktionsausführungsmittel und die grafische Benutzeroberfläche.

2. Verwaltungs- und Steuersystem nach Anspruch 1, wobei der Standortplan im Wesentlichen eine maßstabsgetreue CAD-generierte Zeichnung ist und aus einer Reihe von Lagen besteht, die auf der grafischen Benutzeroberfläche entweder gleichzeitig für einen Überblick über den Status des gesamten Gebäudes oder einzeln zum Überwachen und Steuern von spezifischen Systemen des genannten Gebäudes betrachtet werden können.

3. Verwaltungs- und Steuersystem nach Anspruch 2, wobei für jede Zone eine Lage aus einem ausführlichen Grundriss des Gebäudes besteht und jede weitere Lage sich auf ein anderes System des genannten Gebäudes für diese Zone bezieht.

4. Verwaltungs- und Steuersystem nach Anspruch 3, wobei die weiteren Lagen für jede Zone aus der Gruppe umfassend Sicherheit, Klimatisierung, Telefone, Wartung und dergleichen beim Gebrauch ausgewählt werden, wobei eine oder mehrere weitere Lage(n) über den genannten Grundriss gelegt wird/werden, um den Status dieses Systems für diese Zone des Gebäudes zu zeigen und es dem Benutzer zu gestatten, Eingaben in Bezug auf dieses System für diese Zone zu machen.

5. Verwaltungs- und Steuersystem nach einem der vorherigen Ansprüche, das ein weiteres Eingabemittel wie z.B. ein Zeigergerät, eine Maus, einen Touchscreen-Monitor, einen Trackball, einen Lichtstift oder dergleichen zum Selektieren eines Systems zum Legen auf den genannten Plan beinhaltet.

6. Verwaltungs- und Steuersystem nach Anspruch 5, das eine Anzahl von Objekten des Systems auf dem angezeigten Plan beinhaltet, die auf aktiv gesetzt, deaktiviert, auf einen Wert eingestellt und/oder so eingestellt werden können, dass der aktuelle Status unter Verwendung der genannten weiteren Eingabemittel angezeigt werden kann.

7. Verwaltungs- und Steuersystem nach Anspruch 5 oder Anspruch 6, wobei das weitere Eingabemittel auch zum Einrichten der Beziehung zwischen verschiedenen Objekten oder zwischen dem genannten Gebäude und den Objekten oder zwischen der Umgebung und den Objekten benutzt wird.

8. Verwaltungs- und Steuersystem nach einem der vorherigen Ansprüche, wobei die grafische Benutzeroberfläche zum Anzeigen von historischen Trends der Systeme oder von Teilen davon, Online-Betriebshandbüchern für das System, Online-Instruktionen für Situationsmanagement in dem genannten Gebäude, technischen Zeichnungen des genannten Systems, technischen Zeichnungen des genannten Gebäudes sowie Wartungsinformationen über das Verwaltungs- und Steuersystem und/oder das genannte Gebäude dient.

9. Verwaltungs- und Steuersystem nach einem der vorherigen Ansprüche, auf das über ein Computernetz zugegriffen werden kann.

10. Verwaltungs- und Steuersystem nach einem der vorherigen Ansprüche, mit sämtlicher Dokumentation, allen Handbüchern, Stockwerkplänen und Zeichnungen, die auf einem interaktiv in das System integrierten CAD-System erzeugt wurden.

11. Verwaltungs- und Steuersystem nach einem der vorherigen Ansprüche, ferner mit einem Verwaltungsberechnungssystem.

12. Verwaltungs- und Steuersystem nach einem der vorherigen Ansprüche, das auch die Kosten von Wartung und Service aufzeichnet.

13. Verwaltungs- und Steuersystem nach einem der vorherigen Ansprüche, das automatisch Service-Berichte erstellt.

14. Verwaltungs- und Steuersystem nach einem der vorherigen Ansprüche, das Arbeitszettel für Wartungs- und Service-Arbeiten generiert sowie Wartungs- und Service-Arbeiten und deren Erledigung verfolgt.

15. Verwaltungs- und Steuersystem nach einem der vorherigen Ansprüche, das Mittel zum Übermitteln von ausführlichen Systeminformationen zu externen Agenturen beinhaltet.

16. Verwaltungs- und Steuersystem nach Anspruch 15, wobei die externen Agenturen bewaffnete Sicherheitsunternehmen, die örtliche Feuerwehr oder die Polizei beinhalten.

17. Verwaltungs- und Steuersystem nach einem der vorherigen Ansprüche, das mehrere Monitore aufweist, die jeweils so gestaltet sind, dass sie verschiedene Informationen anzeigen und individuell gesteuert werden können.

18. Verwaltungs- und Steuersystem nach einem der vorherigen Ansprüche, das kontextempfindliche Nachrichtenübermittlungen zu Mobiltelefonen oder Pagern bereitstellt.

19. Verwaltungs- und Steuersystem nach einem der Ansprüche 6 bis 18, umfassend eine grafische Benutzeroberfläche, die eine intuitive grafische Benutzeroberfläche ist, die den Benutzer beim Navigieren durch das System zwischen den verschiedenen Lagen und Objekten assistiert.

20. Gebäude, das mit dem Verwaltungs- und Steuersystem nach einem der Ansprüche 1 bis 18 verwaltet und gesteuert wird.

## Revendications

1. Système de gestion et de contrôle pour un bâtiment possédant de multiples systèmes avec différents protocoles et qui comporte une ou plusieurs interfaces d'utilisateur graphiques sur lesquelles est affiché un plan du site dudit bâtiment afin de permettre à un utilisateur de saisir des instructions concernant diverses zones dudit bâtiment et de surveiller le statut de divers systèmes dudit bâtiment et qui est utile pour faciliter la gestion et le contrôle de multiples systèmes possédant différents protocoles pour ledit bâtiment, les systèmes comprenant
. un ou plusieurs moyens d'acquisition de données en vue d'acquérir des données concernant le statut dudit bâtiment ;
. un ou plusieurs moyens effectuant une fonction de contrôle en vue d'effectuer un contrôle sur au moins certains aspects dudit bâtiment ;
. un ou plusieurs moyens de stockage de données ;
. un ou plusieurs ensembles d'instructions fournis aux moyens de stockage de données, lesdits ensembles d'instructions comportant la relation entre les données récupérées par les moyens d'acquisition de données, les instructions saisies par un utilisateur par l'intermédiaire de l'interface d'utilisateur graphique, des paramètres de fonctionnement prédéfinis pour ledit bâtiment, et des valeurs de sortie de fonction de contrôle en réponse aux données récupérées par les moyens d'acquisition de données, les instructions saisies par l'utilisateur par l'intermédiaire de l'interface d'utilisateur graphique, et des paramètres de fonctionnement prédéfinis pour ledit bâtiment ; et
. un ou plusieurs processeurs de données en vue de traiter ledit ensemble d'instructions et de générer des valeurs de sortie pour les moyens effectuant une fonction de contrôle et l'interface d'utilisateur graphique.

2. Système de gestion et de contrôle selon la revendication 1, dans lequel le plan du site est essentiellement un dessin à l'échelle généré par CAO et est constitué d'un certain nombre de couches qui peuvent être visualisées sur l'interface d'utilisateur graphique soit simultanément pour une vue d'ensemble du statut du bâtiment entier soit individuellement pour surveiller et contrôler des systèmes spécifiques dudit bâtiment.

3. Système de gestion et de contrôle selon la revendication 2, dans lequel pour chaque zone, une couche est constituée d'une vue en plan détaillée du bâtiment et chaque couche supplémentaire concerne un système différent dudit bâtiment pour cette zone.

4. Système de gestion et de contrôle selon la revendication 3, dans lequel les couches supplémentaires pour chaque zone sont sélectionnées parmi le groupe comportant la sécurité, la climatisation, les téléphones, la maintenance, et similaires, utilisés, une ou plusieurs couches supplémentaires étant recouvertes sur ladite vue en plan pour afficher le statut de ce système pour cette zone du bâtiment ainsi que pour permettre la saisie par l'utilisateur concernant ce système pour cette zone.

5. Système de gestion et de contrôle selon l'une quelconque des revendications précédentes, qui comporte un moyen de saisie supplémentaire tel qu'un dispositif de pointage, une souris, un moniteur à écran tactile, une boule de commande, un stylo lumineux, ou similaires, en vue de sélectionner un système à recouvrir sur ledit plan.

6. Système de gestion et de contrôle selon la revendication 5, qui comporte un certain nombre d'objets du système sur le plan affiché et qui peuvent être réglés pour activer, désactiver, régler à une valeur et/ou régler pour afficher le statut actuel en utilisant ledit moyen de saisie supplémentaire.

7. Système de gestion et de contrôle selon la revendication 5 ou la revendication 6, dans lequel le moyen de saisie supplémentaire est également utilisé pour établir la relation entre divers objets, ou entre ledit bâtiment et les objets, ou entre l'environnement et les objets.

8. Système de gestion et de contrôle selon l'une quelconque des revendications précédentes, dans lequel l'interface d'utilisateur graphique est utilisée pour afficher des tendances historiques des systèmes ou de parties de ceux-ci, des manuels de fonctionnement en ligne pour le système, des instructions en ligne pour la gestion de situation dudit bâtiment, des dessins techniques dudit système, des dessins techniques dudit bâtiment, et des informations de maintenance concernant le système de gestion et de contrôle et/ou ledit bâtiment.

9. Système de gestion et de contrôle selon l'une quelconque des revendications précédentes, qui est accessible sur un réseau informatique.

10. Système de gestion et de contrôle selon l'une quelconque des revendications précédentes, possédant toute la documentation, tous les manuels, plans de sol et dessins produits sur un système de CAO incorporé de manière interactive dans le système.

11. Système de gestion et de contrôle selon l'une quelconque des revendications précédentes, comportant en outre un système de comptabilité de gestion.

12. Système de gestion et de contrôle selon l'une quelconque des revendications précédentes, qui garde également un enregistrement des coûts de maintenance et d'entretien.

13. Système de gestion et de contrôle selon l'une quelconque des revendications précédentes, qui génère automatiquement des rapports d'entretien.

14. Système de gestion et de contrôle selon l'une quelconque des revendications précédentes, qui génère des fiches de travail pour des travaux de maintenance et d'entretien et trace également les travaux de maintenance et d'entretien et leurs réalisations.

15. Système de gestion et de contrôle selon l'une quelconque des revendications précédentes, qui comporte des moyens de communication d'informations détaillées sur le système à des agences externes.

16. Système de gestion et de contrôle selon la revendication 15, dans lequel les agences externes comportent des sociétés de sécurité à réponse armée, un service d'incendie local, ou l'hôtel de police.

17. Système de gestion et de contrôle selon l'une quelconque des revendications précédentes, qui comporte de multiples moniteurs, chacun étant adapté à afficher différentes informations et à être contrôlé individuellement.

18. Système de gestion et de contrôle selon l'une quelconque des revendications précédentes, qui fournit des messages sensibles au contexte à des téléphones portables ou à des téléavertisseurs.

19. Système de gestion et de contrôle selon l'une quelconque des revendications 6 à 18, comprenant une interface d'utilisateur graphique qui est une interface graphique intuitive en vue d'aider l'utilisateur à naviguer dans le système entre les différentes couches et objets.

20. Bâtiment géré et contrôlé par le système de gestion et de contrôle selon l'une quelconque des revendications 1 à 18.
